# EUROPÄISCHE PATENTSCHRIFT

(11) **EP 0 468 399 B1**
(45) Veröffentlichungstag und Bekanntmachung des Hinweises auf die Patenterteilung: **08.03.1995**
(21) Anmeldenummer: 91112234.9
(22) Anmeldetag: 22.07.1991
(51) Int. Cl.: G01G 11/08, G01G 13/10

(54) **Anlage zum kontinuierlichen, pneumatischen gravimetrischen Dosieren und/oder Mischen von Schüttgütern**
Device for the continuous pneumatic gravimetric dosage and/or mixture of bulk materials
Dispositif pour le dosage et/ou le mélange continu, pneumatique gravimetrique de marchandises en vrac

(30) Priorität: 27.07.1990 DE 4023948
(43) Veröffentlichungstag der Anmeldung: 29.01.1992
(73) Patentinhaber: Pfister GmbH, 86165 Augsburg (DE)
(72) Erfinder: Häfner, Hans Wilhelm, W-8890 Aichach-Walchshofen (DE)
(74) Vertreter: Kahler, Kurt, Dipl.-Ing.

(56) Entgegenhaltungen:
- EP-A- 0 198 956
- DE-A- 2 361 279
- DE-A- 2 606 941
- DE-A- 2 855 751
- FR-A- 2 526 541

## Beschreibung

Die Erfindung betrifft eine Anlage zum kontinuierlichen, pneumatischen gravimetrischen Dosieren von Schüttgütern gemäß dem Oberbegriff des Patentanspruchs 1, sowie eine hieraus aufgebaute Anlage zum Mischen von Schüttgütern.

Die DE-PS 32 17 406 (= FR-A-25 26 541) offenbart eine Vorrichtung zum kontinuierlichen, gravimetrischen Dosieren von schüttfähigem Gut, das über eine Aufgabeöffnung in Taschen eines in einem Gehäuse angeordneten, sich um eine vertikale Achse drehbaren Rotors geleitet und über eine zur Aufgabeöffnung in Drehrichtung des Rotors versetzte Entleerungsöffnung unter Zuführen von Druckluft entfernt wird. Hierbei wird ein offenes System verwendet, d. h. daß die Druckluft von einer Druckluftquelle angelegt und die das Schüttgut führende Luft unmittelbar an den Verwendungsort des Schüttguts geführt wird. Als Beispiel ist dabei angegeben, daß das Ende der Förderleitung am Brenner eines Ofens angeordnet ist. Mit der bekannten Vorrichtung läßt sich eine relativ gute Kurzzeit- und Langzeitgenauigkeit bei hohem Durchsatz erzielen. Ein gewisser Nachteil kann sich dadurch ergeben, daß die von der Druckluftquelle gelieferte Luft unterschiedliche Temperatur und insbesondere einen unterschiedlichen Feuchtigkeitsgehalt haben kann. Ferner ist nicht zu vermeiden, daß die Restluft, aus der das geförderte Schüttgut entfernt wurde, die Atmosphäre verschmutzt.

Aus dem Buch "Dosieren in der Kunststofftechnik", Hrsg.: Verein Dt. Ingenieure, VDI-Ges. Kunststofftechnik, 1. Aufl., 1978 S. 70 und 71 sind Anlagen zum kontinuierlichen, pneumatischen gravimetrischen Mischen einer Anzahl von Komponenten bekannt, bei denen als gravimetrische Dosiervorrichtungen sog. Differentialdosierwaagen verwendet werden, die mittels Schneckentrieb arbeiten und das gravimetrisch dosierte Gut über eine Zumischvorrichtung einer Sammelschnecke zuführen, an deren Ende eine Sammelmischvorrichtung vorgesehen ist. Die Anlage ist äußerst aufwendig, insbesondere wenn große Mengen an Schüttgütern gefördert werden sollen. Ein besonderes Problem stellt die Zuführung der verschiedenen Komponenten zur Sammelschnecke dar.

Bei einer weiteren, in diesem Buch angegebenen Ausführungsform werden die einzelnen Additive zusammen mit einer gewissen Menge der Hauptkomponente nacheinander über einen Wiegebehälter gewogen und in einem Hochleistungschargenmischer gemischt. Anschließend wird das Gemisch einer pneumatischen Förderstrecke zugeführt. Auch diese Anlage ist verhältnismäßig kompliziert im Aufbau, und die Zuführung des Schüttgutes zu der pneumatischen Förderung bereitet Schwierigkeiten. Eine ähnliche Einrichtung zum pneumatischen Beschicken einer Behälterwaage ist aus der DE-A-28 55 751 bekannt.

Der Erfindung liegt die prinzipielle Aufgabe zugrunde, eine Anlage zum kontinuierlichen, pneumatischen gravimetrischen Dosieren von Schüttgütern anzugeben, bei der diese mit wenig Energie über lange Strecken bei relativ einfachem Aufbau gefördert werden können.

Eine derartige Anlage besitzt die Merkmale des Patentanspruchs 1.

Bei der industriellen Verarbeitung von Schüttgütern ist es häufig erforderlich, verschiedene Stoffe in oft stark wechselnden Verhältnissen zu einem Gemenge zu vermischen. Dabei kann es sich um ganz erhebliche Mengen handeln, die meist kontinuierlich in einem möglichst genauen Mischungsverhältnis zur Verfügung gestellt werden sollen.

In Weiterbildung des Erfindungsgegenstandes soll deshalb eine Anlage zum kontinuierlichen, pneumatischen gravimetrischen Mischen von Schüttgütern angegeben werden, die mit relativ hoher Genauigkeit arbeitet, und einfach im Aufbau und umweltfreundlich ist.

Eine derartige Anlage ist im Patentanspruch 6 gekennzeichnet.

Die Verwendung eines geschlossenen, pneumatischen Förderweges im Zusammenhang mit einer gravimetrischen Dosiervorrichtung, bevorzugt einer solchen gemäß DE-PS 32 17 406, hat den Vorteil, daß auf die Dauer mit Luft mit beständigen Eigenschaften gearbeitet wird. Die Zuführung des Schüttgutes in den pneumatischen Kreislauf wird dadurch besonders einfach, daß diese Zuführung direkt, d. h. ohne Verwendung von Zuführvorrichtungen erfolgt, was die Genauigkeit der Messung erhöht und eine kontinuierliche Förderung begünstigt. Durch die Luftpulsation in den Kammern ergibt sich eine Vergleichmäßigung des Schüttgutes. Ein besonderer weiterer Vorteil besteht darin, daß dann, wenn an der Entleerungsstation ein ggf. steuerbarer Unterdruck vorhanden ist, also saugend gefördert wird, der Luftverlust an der Aufgabestation reduziert wird und eine gute Entleerung erfolgt.

Diese Vorteile sind besonders wichtig für eine Anlage zum kontinuierlichen, pneumatischen gravimetrischen Mischen von Schüttgütern, bei der es trotz variierender Mischungsverhältnisse auf hohe Genauigkeit, kontinuierliche Förderung, ggf. über längere Strecken, Homogenisierung der Schüttgüter und hohen Durchsatz ankommt.

Bevorzugte Weiterbildungen der erfindungsgemäßen Anlage sind in den abhängigen Ansprüchen gekennzeichnet.

Ausführungsbeispiele der erfindungsgemäßen Anlagen werden nachstehend anhand der Zeichnungen beschrieben. Es zeigen:
- Fig. 1: eine schematische Seitenansicht einer gravimetrischen Dosiervorrichtung, wie sie bei der erfindungsgemäßen Anlage Verwendung findet,
- Fig. 2: eine schematische Seitenansicht einer Anlage zum kontinuierlichen, pneumatischen gravimetrischen Dosieren von Schüttgütern gemäß einem ersten Ausführungsbeispiel, und
- Fig. 3: eine schematische Gesamtansicht eines zweiten Ausführungsbeispiels der erfindungsgemäßen Anlage zum kontinuierlichen pneumatischen gravimetrischen Mischen von Schüttgütern.

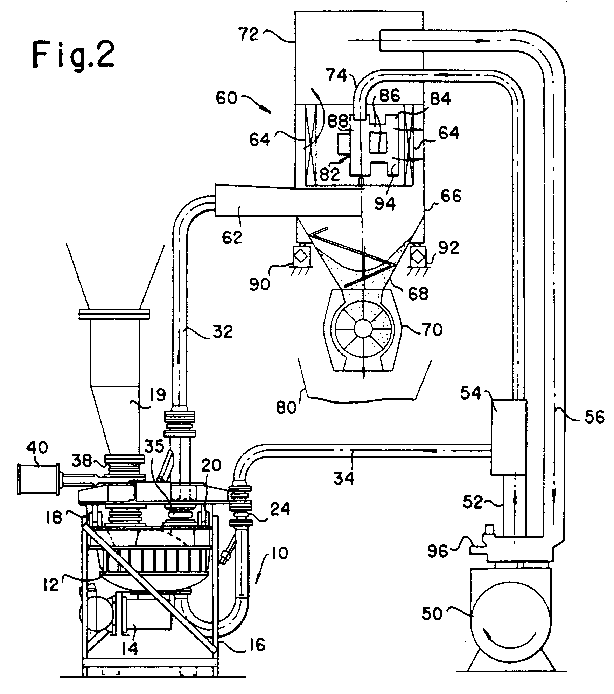

Es sei zuerst auf Fig. 2 Bezug genommen, die die wesentlichen Vorrichtungen der Anlage des ersten Ausführungsbeispiels und ihre Verbindungen zeigt. Hierbei wird angenommen, daß Schüttgut einer gravimetrischen Dosiervorrichtung 10 direkt aus einem nicht gezeigten Schüttgutbunker über eine Zuführung 19 zugeführt wird.

Die Schüttgutförderung erfolgt pneumatisch, wobei ein Luftstrom von einem Gebläse 50 über eine Hauptleitung 52 und gegebenenfalls einen Verteiler 54 über eine Zuleitung 34 der Dosiervorrichtung 10 zugeführt wird.

Das jeweils zugemessene Schüttgut gelangt über eine Ableitung 32 und eine Zuführung 62 in einen Zyklonsichter 60, wo die Luft durch ein Filter 64 abgetrennt wird und das Schüttgut über einen Zyklontrichter 68 (oder im freien Fall) und eine Zellenradschleuse 70 in einen Aufnahmebehälter 80 abgegeben wird.

Der in ein oberes Gehäuseteil 72 des Zyklonsichters 60 abgegebene Luftstrom gelangt über eine Rückleitung 56 zum Gebläse 50 zurück, so daß sich ein geschlossener Kreislauf ergibt. Da in der gravimetrischen Dosiervorrichtung 10 zwangsläufig etwas Luft verlorengeht, ist im Bereich des Gebläses 50 ein Schnüffelventil 96 angeordnet, über das soviel Luft wieder zugeführt wird, daß die Luftmenge im System konstant gehalten wird.

Beim Ausführungsbeispiel wird eine gravimetrische Dosiervorrichtung verwendet, wie sie in der DE-PS 32 17 406 im einzelnen beschrieben ist. Es wird deshalb hier nur kurz auf diese Vorrichtungen eingegangen.

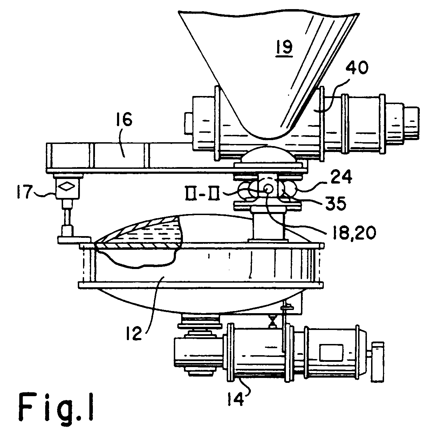

Wie aus den Fig. 1 und 2 ersichtlich, umfaßt eine derartige kontinuierlich arbeitende, gravimetrische Dosiervorrichtung ein Gestell 16, an dem an zwei Anlenkpunkten 18 und 20 asymmetrisch eine Rotoreinrichtung 12 schwenkbar aufgehängt ist. Wie aus Fig. 1 ersichtlich, ist die Rotoreinrichtung 12 mit größtmöglichem Abstand von der Anlenkung an den Punkten 18, 20 auch über eine Kraftmeßzelle 17 mit dem Gestell 16 verbunden.

Wie in der genannten DE-PS 32 17 406 im einzelnen beschrieben, rotiert in der Rotoreinrichtung 12 ein mit senkrechten Durchgangsöffnungen in Ringform ausgebildeter Rotor unter Antrieb durch einen Motor 14.

Das über den Zuführtrichter 19 z.B. durch eine Zellenradschleuse oder einen Dosierschieber 40 in die Durchgangsöffnungen eingefüllte Schüttgut wird nach entsprechendem Weiterrotieren des Rotors durch den über die Zuleitung 34 von unten angelegten Luftstrom in die Ableitung 32 ausgeblasen. Elastische Anschlußglieder, beispielsweise Kompensatoren 24 und 35 für die Verbindung der Rotoreinrichtung 12 mit der Zu- und Ableitung 34 bzw. 32, sowie mit der Schüttgutzuführung sind gemäß der Lehre der DE-PS 32 17 406 in der durch die Anlenkpunkte 18 und 20 verlaufenden Achse II-II angeordnet und sorgen dafür, daß das Meßergebnis nicht durch Momente beeinträchtigt wird, die durch Unterschiede zwischen dem Druck an der Aufgabeöffnung und demjenigen an der Entleerungsöffnung auftreten können.

Die auf den Rotor durch das eingefüllte Schüttgut ausgeübte Kraft wird mittels der Kraftmeßzelle 17 festgestellt, und unter Berücksichtigung der Drehzahl des Rotors läßt sich dann die pro Zeiteinheit geförderte Schüttgutmasse feststellen und durch Ändern der Rotordrehzahl (und gegebenenfalls der Schüttgutzufuhr über die Zellenradschleuse 40) regeln.

Wie zuvor erwähnt, wird im Zyklonsichter 60 der Luftstrom von dem angeförderten Schüttgut durch ein Filter 64 getrennt. Eine besondere Vorrichtung sorgt gemäß der Erfindung dafür, daß das Filter 64 ständig gereinigt wird und somit seine Funktion erfüllen kann.

Hierzu ist eine Blasvorrichtung 82 im Innenraum des Filters 64 angeordnet mit einem vornehmlich senkrecht in der Nähe des Filters 64 angeordneten Blasrohr 84 mit zum Filter 64 hin gerichteten Düsen 94. Das Blasrohr 84 wird über Verbindungsrohre 86 von einem in der zentralen Längsachse des Filters 64 rotierbar angeordneten Zentralrohr 88 mit Luft beschickt, die vom Gebläse 50 über eine Leitung 74 zugeführt wird. Die vorzugsweise vom Antrieb des Zyklonsichters 60 angetriebene Blasvorrichtung 82 rotiert mit einer verhältnismäßig geringen Drehzahl von beispielsweise 10 U/min und überstreicht dabei die Innenmantelfläche des Filters 64. Die in Düsen 94 entströmende Luft bläst nun strichförmig entgegen der Hauptluftströmrichtung der Anlage Schüttgut aus dem Filter 64, ohne daß die Funktion der Anlage gestört wird.

Anstelle des senkrechten Blasrohrs 84 könnte auch eine spiralförmige Düsenanordnung verwendet werden.

Es zeigt sich somit, daß diese kontinuierliche Filterreinigung weiter dazu beiträgt, die erfindungsgemäße Anlage kontinuierlich bei hoher Meßgenauigkeit zu betreiben.

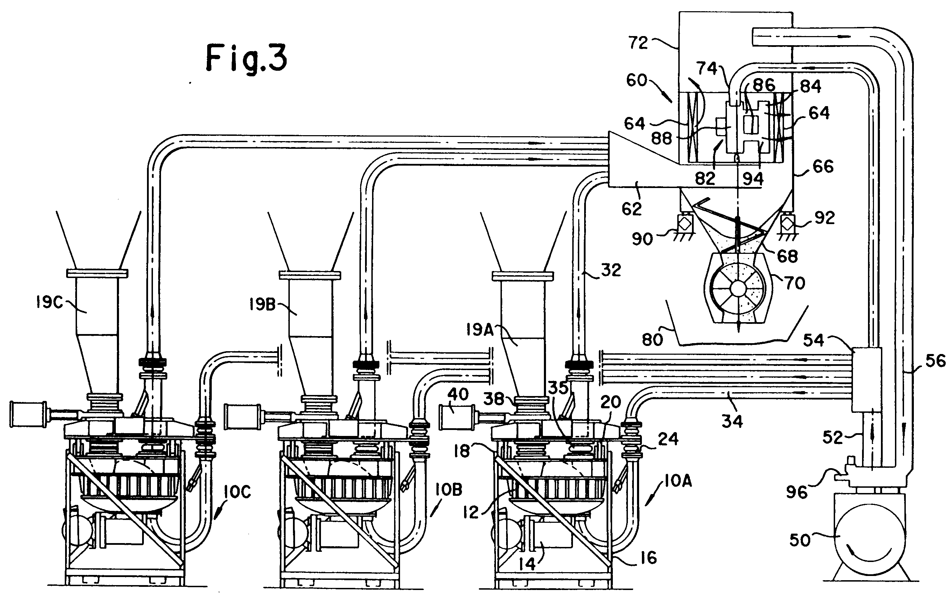

Es sei nun auf die Fig. 3 Bezug genommen, die die wesentlichen Vorrichtungen und Verbindungen der Anlage des zweiten Ausführungsbeispiels in Anwendung der Erfindung auf ein Mischsystem zeigt. Hierbei wird angenommen, daß dreierlei Stoffe zu mischen sind, so daß entsprechend drei gravimetrische Dosiervorrichtungen 10A, 10B, 10C verwendet werden, denen das jeweilige Material direkt aus nicht gezeigten Schüttgutbunkern über Zuführungen 19A, 19B bzw. 19C zugeführt wird.

Die Schüttgutförderung erfolgt wiederum pneumatisch, wobei ein Luftstrom von dem Gebläse 50 über die Hauptleitung 52 dem Verteiler 54 zugeführt wird, der über entsprechende Zuleitungen 34 mit den Dosiervorrichtungen 10A, 10B bzw. 10C verbunden ist.

Das jeweils zugemessene Schüttgut gelangt über die Ableitungen 32 und eine Zusammenführung 62 in den Zyklonsichter 60, wo die Luft durch das Filter 64 abgetrennt wird und das Schüttgut über den Zyklontrichter 68 und die Zellenradschleuse 70 in den Aufnahmebehälter 80 oder direkt in eine Verarbeitungsvorrichtung abgegeben wird.

Wie zuvor angegeben, läßt sich der Massedurchsatz für die verwendeten gravimetrischen Dosiervorrichtungen 10A, 10B und 10C in weiten Grenzen einstellen und auf einen Sollwert regeln. Dies bedeutet, daß auch bei sehr unterschiedlichen Mengenverhältnissen die gleichen Dosiervorrichtungen verwendet werden können. Andererseits können für solche Situationen auch gravimetrische Dosiervorrichtungen mit unterschiedlich großem Massedurchsatz zum Einsatz kommen.

Eine weitere Möglichkeit, den Massedurchsatz zu beeinflussen besteht darin, in dem Verteiler 54 abweichend von einer gleichmäßigen Verteilung des Luftstromes auf die Zuleitungen 34 für letztere Regelventile vorzusehen, die eine Variation der Luftstrommenge ermöglichen. Es ist ferner ersichtlich, daß der Gesamtluftstrom auch am Gebläse 50 variiert werden kann, um eine kontinuierliche Förderung und Mischung von Schüttgut abhängig von dessen Bedarf zu gewährleisten.

In diesem Zusammenhang sei darauf hingewiesen, daß der Zyklonsichter 60 auf vorzugsweise drei Kraftmeßzellen abgestützt sein kann, von denen nur die Kraftmeßzellen 90, 92 (vgl. auch Fig. 2) gezeigt sind. Es läßt sich somit laufend die jeweils darin befindliche Schüttgutmasse feststellen und entweder die Drehzahl der Zellenradschleuse 70 oder die Gesamtluftstrommenge des Gebläses 50 beeinflussen.

Die vorstehenden Erläuterungen zeigen, daß bei der erfindungsgemäßen Anlage die verschiedensten Misch- und Fördersituationen mit verhältnismäßig hoher Meßgenauigkeit bei kontinuierlicher Arbeitsweise bewältigt werden können.

Für die Einstellung der entsprechenden Mischungsverhältnisse und Fördermengen pro Zeiteinheit und die Regelung der entsprechenden Parameter auf die eingestellten Sollwerte wird ein rechnergesteuertes, zentrales Dosiersteuersystem verwendet, wie es beispielsweise in dem Buch "Handbuch des Wägens", Hrsg.: Manfred Kochsieck, 2. Auflg. 1989, S. 477/478 beschrieben ist, wobei entsprechende Anpassungen für die erfindungsgemäße Anlage vorzunehmen sind.

Abschließend sei darauf hingewiesen, daß zwar vorteilhaft beim bevorzugten Ausführungsbeispiel gravimetrische Dosiervorrichtungen der DE-PS 32 17 406 verwendet werden. Sie können jedoch auch durch andere, entsprechend geeignete Dosiervorrichtungen ersetzt werden, soweit diese in der angegebenen Art pneumatisch betrieben werden.

## Patentansprüche

1. Anlage zum kontinuierlichen, pneumatischen gravimetrischen Dosieren von Schüttgütern, enthaltend
- eine gravimetrische Dosiervorrichtung (10) in Form eines in einem Gehäuse angeordneten Rotors, der Taschen besitzt, die über eine am Gehäuse angeordnete Aufgabeöffnung mit Schüttgut beschickbar sind und über eine zur Aufgabeöffnung in Drehrichtung des Rotors versetzte Entleerungsöffnung unter Zuführen von Druckluft entleerbar sind;
- eine Schüttgutzuführung (19) zu der Dosiervorrichtung (10); und
- einen blasend oder saugend arbeitenden pneumatischen Förderweg (50,52,34,32,62,56) mit einem Gebläse (50), einer Zuleitung (34) zu der Dosiervorrichtung (10) und einer Ableitung (32) von der Dosiervorrichtung (10), gekennzeichnet durch eine Schüttgutsammelvorrichtung (60) und eine Luft-Rückleitung (56) zum Gebläse (50) im pneumatischen Förderweg, wobei der pneumatische Förderweg geschlossen ist.

2. Anlage nach Anspruch 1, dadurch gekennzeichnet, daß die Sammelvorrichtung als Schüttgut-/Lufttrennvorrichtung (60) ausgebildet ist, die vorzugsweise eine Zyklonsichtervorrichtung ist mit einem Filter (64) zum Luftausgang (72) hin und einer luftdichten Schüttgutabgabevorrichtung (70).

3. Anlage nach Anspruch 2, dadurch gekennzeichnet, daß im Innenraum des zylindrisch ausgebildeten Filters (64) eine Blasvorrichtung (82) zur Filterreinigung angeordnet ist, die vorzugsweise aus einer linienförmig angeordneten Düsenanordnung (84) besteht, die um die zentrale Längsachse des Filters (64) drehbar ist, wobei der Blasvorrichtung (82) Druckluft von dem Gebläse (50) zugeführt wird, wobei vorzugsweise die linienförmige Düsenanordnung aus einem in der Nähe der inneren Mantelfläche des Filters (64) parallel zu dessen Längsachse angeordneten Blasrohr (84) besteht.

4. Anlage nach einem der vorhergehenden Ansprüche, dadurch gekennzeichnet, daß die Sammelvorrichtung (60) auf Kraftmeßzellen (90, 92) abgestützt ist.

5. Anlage nach einem der vorhergehenden Ansprüche, gekennzeichnet durch eine Steuereinrichtung, die anhand eingestellter Sollwerte bezüglich der gewünschten Fördermenge pro Zeiteinheit und der festgestellten Istwerte eine entsprechende Regelung am Gebläse (50), dem Verteiler (54), der Dosiervorrichtung (10) und/oder der Ausgabevorrichtung (70) vornimmt, wobei vorzugsweise der Schüttgutdurchsatz für die Dosiervorrichtung (10) durch Variieren der zugeführten Luftmenge pro Zeiteinheit beeinflußt werden kann.

6. Anlage zum kontinuierlichen, pneumatischen gravimetrischen Mischen von Schüttgütern, enthaltend
a) mehrere gravimetrische Dosiervorrichtungen (10A,10B,10C) in Form eines in einem Gehäuse angeordneten Rotors, der Taschen besitzt, die über eine am Gehäuse angeordnete Aufgabenöffnung mit Schüttgut beschickbar sind und über eine zur Aufgabeöffnung in Drehrichtung des Rotors versetzte Entleerungsöffnung unter Zuführen von Druckluft entleerbar sind;
b) eine Schüttgutzuführung (19A;19B;19C) für jede Dosiervorrichtung (10A,10B,10C); und
c) einen geschlossenen, pneumatischen Förderweg (50,52,34,32,62,56) mit einem gemeinsamen Gebläse (50), je einer Zuleitung (34) und je einer Ableitung (32) pro Dosiervorrichtung (10A,10B,10C), einer gemeinsamen Schüttgut-Sammelvorrichtung (60) und einer gemeinsamen Luft-Rückleitung (56).

7. Anlage nach einem der vorhergehenden Ansprüche, dadurch gekennzeichnet, daß im pneumatischen Förderweg eine Vorrichtung (96) zum Ergänzen von aus dem pneumatischen Förderweg ausgetretener Luft etwa in Form eines Schnüffelventils vorgesehen ist.

8. Anlage nach Anspruch 6 oder 7, dadurch gekennzeichnet, daß dem Gebläse (50) ein Verteiler (54) nachgeschaltet ist, an den die Zuleitungen (34) für den Luftstrom zu den Dosiervorrichtungen (10A, 10B, 10C) angeschlossen sind, wobei vorzugsweise der Luftstrom in den Zuleitungen (34) mittels vornehmlich im Verteiler (54) angeordneter Ventile unterschiedlich einstellbar sein kann.

9. Anlage nach einem der Ansprüche 6 bis 8, gekennzeichnet durch eine Steuereinrichtung, die anhand eingestellter Sollwerte bezüglich des gewünschten Mischverhältnisses, der gewünschten Fördermenge pro Zeiteinheit und der festgestellten Istwerte eine entsprechende Regelung am Gebläse (50), dem Verteiler (54), der Dosiervorrichtung (10) und/oder der Abgabevorrichtung (70) vornimmt, wobei vorzugsweise der Schüttgutdurchsatz für die einzelnen Dosiervorrichtungen (10A;10B;10C) durch Variieren der zugeführten Luftmenge pro Zeiteinheit beeinflußt werden kann.

## Claims

1. A device for continuous pneumatic gravimetric metering of bulk materials, comprising:
- gravimetric metering means (10) formed as a rotor arranged in a housing and having pockets chargeable with bulk material through a charging aperture provided at the housing and dischargeable by supplying pressurized air, through a discharging aperture offset, in respect of the charging aperture, in a direction of rotation of the rotor;
- bulk material supply means (19) connected to said gravimetric metering means (10); and
- a pneumatic feed path (50, 52, 34, 32, 62, 56) of the blow type or suction type, comprising a blast (50), an inlet pipe (34) leading into said metering means (10) and an outlet pipe (32) leading out from said metering means (10),
characterized by
bulk material collecting means (60) and an air return path (56) connected to said blast (50) in the pneumatic feed path, said pneumatic feed path being a closed loop.

2. The device of claim 1, characterized in that the collecting means is formed as a bulk material/air separation means (60), preferably as a cyclone separator means comprising a filter (64) directed toward the air outlet (72) and an airtight bulk material discharge unit (70).

3. The device of claim 2, characterized in that said cylindrical filter (64) has arranged in its interior blowing means (82) for cleaning the filter, which blowing means preferably consists of a linearly aligned nozzle arrangement (84) rotatable about the central longitudinal axis of said filter (64), whilst compressed air is supplied to said blowing means (82) by said blast (50), the linear nozzle arrangement preferably being made up by a blow pipe (84) arranged next to the interior shell of said filter (64) and in parallel to the longitudinal axis thereof.

4. The device of any of the preceding claims, characterized in that said collecting means (60) is supported on force measuring cells (90, 92).

5. The device of any of the preceding claims, characterized by control means controlling the setting of said blast (50), the distributor (54), said metering means (10) and/or said discharge unit (70) in correspondence with preset nominal values determining the required weight velocity per unit of time and the detected actual values, wherein the weight rate of the bulk material for said metering means (10) may preferably be influenced by varying the air volume supplied per unit of time.

6. A device for continuous pneumatic gravimetric mixing of bulk materials, comprising:
a) several gravimetric metering means (10A, 10B, 10C) formed as a rotor arranged in a housing and having pockets chargeable with bulk material through a charging aperture provided at the housing and dischargeable by supplying pressurized air, through a discharging aperture offset, in respect of the charging aperture, in a direction of rotation of the rotor;
b) bulk material supply means (19A; 19B; 19C) for each of said gravimetric metering means (10A, 10B, 10C); and
c) a closed pneumatic feed path (50, 52, 34, 32, 62, 56) comprising a central blast (50), an inlet pipe (34) and an outlet pipe (32) for each of said metering means (10A, 10B, 10C), a central bulk material collecting means (60) and a central air return path (56).

7. The device of any of the preceding claims, characterized in that the pneumatic feed path has integrated therein means (96) for supplementing the air leakage of the pneumatic feed path, which means may be formed as a relief valve.

8. The device of either claim 6 or claim 7, characterized in that said blast (50) has subsequently added thereto a distributor (54) having connected thereto said inlet pipes (34) provided for the air stream leading to said metering means (10A, 10B, 10C), the air streams in said inlet pipes (34) preferably being adjustable in different amounts by means of valves, essentially arranged within said distributor (54).

9. The device of any of claims 6 to 8, characterized by control means controlling the setting of said blast (50), said distributor (54), said metering means (10) and/or said discharge unit (70) in correspondence with preset nominal values determining the required mixing ratio, the required weight velocity per unit of time and the detected actual values, wherein the weight rate of the bulk material for each of said metering means (10A; 10B; 10C) may preferably be influenced by varying the air volume supplied per unit of time.

## Revendications

1. Installation pour le dosage gravimétrique continu, pneumatique de matériau en vrac, comprenant
- un dispositif (10) de dosage gravimétrique sous la forme d'un rotor disposé dans un carter et possédant des poches qui peuvent être remplies de matériau en vrac au moyen d'une ouverture de chargement disposée sur le carter, et qui peuvent être vidées, sous apport d'air comprimé, au moyen d'une ouverture de vidage décalée par rapport à l'ouverture de chargement dans la direction de rotation du rotor;
- un moyen (19) pour apporter le matériau en vrac au dispositif de dosage (10); et
- un parcours de transport pneumatique (50, 52, 34, 32, 62, 56) fonctionnant par soufflage ou aspiration, avec une soufflante (50), une conduite (34) d'arrivée au dispositif de dosage (10) et une conduite (32) de sortie du dispositif de dosage (10),
**caractérisée** par un dispositif (60) collecteur de matériau en vrac et une conduite (56) de retour de l'air vers la soufflante (50), le parcours de transport pneumatique étant fermé.

2. Installation selon la revendication 1, **caractérisée** en ce que le dispositif collecteur est conçu comme dispositif (60) séparant l'air du matériau en vrac, qui est de préférence un dispositif à cyclone séparateur avec un filtre (64) vers la sortie d'air (72) et un dispositif (70) étanche à l'air de délivrance de matériau en vrac.

3. Installation selon la revendication 2, **caractérisée** en ce qu'est disposé, à l'intérieur du filtre (64) réalisé cylindrique, en vue du nettoyage de ce filtre, un dispositif de soufflage (82) qui est de préférence constitué d'un arrangement de buses (84) disposé linéairement qui est rotatif autour de l'axe longitudinal central du filtre (64), le dispositif de soufflage (82) étant alimenté en air comprimé par la soufflante (50) et l'arrangement linéaire de buses étant de préférence formé par un tuyau de soufflage (84) disposé au voisinage de la surface d'enveloppe intérieure du filtre (64) et parallèlement à l'axe longitudinal de ce dernier.

4. Installation selon l'une des revendications précédentes, **caractérisée** en ce que le dispositif collecteur (60) est supporté sur des cellules dynamométriques (90, 92).

5. Installation selon l'une des revendications précédentes, **caractérisée** par un dispositif de commande qui, à l'aide de valeurs de consigne réglées concernant le débit souhaité de transport par unité de temps et des valeurs réelles déterminées, entreprend une régulation correspondante sur la soufflante (50), le répartiteur (54), le dispositif de dosage (10) et/ou le dispositif de délivrance (70), le débit de matériau en vrac pour le dispositif de dosage (10) pouvant de préférence être modifié en faisant varier la quantité apportée d'air par unité de temps.

6. Installation pour le mélangeage gravimétrique continu, pneumatique de matériaux en vrac, **comprenant**
a) plusieurs dispositifs (10A, 10B, 10C) de dosage gravimétrique sous la forme d'un rotor disposé dans un carter et possédant des poches qui peuvent être remplies de matériau en vrac au moyen d'une ouverture de chargement disposée sur le carter, et qui peuvent être vidées, sous apport d'air comprimé, au moyen d'une ouverture de vidage décalée par rapport à l'ouverture de chargement dans la direction de rotation du rotor;
b) un moyen (19A ; 19B ; 19C) pour apporter le matériau en vrac à chaque dispositif de dosage (10A, 10B, 10C) ; et
c) un parcours de transport pneumatique fermé (50, 52, 34, 32, 62, 56), avec une soufflante commune (50), une conduite d'arrivée respective (34) et une conduite de sortie respective (32) pour chaque dispositif de dosage (10A, 10B, 10C), un dispositif collecteur commun (60) de matériau en vrac et une conduite commune (56) de retour d'air.

7. Installation selon l'une des revendications précédentes, **caractérisée** en ce qu'un dispositif (96), environ du genre soupape reniflante, est prévu dans le parcours de transport pneumatique pour suppléer l'air qui s'est échappé du parcours de transport pneumatique.

8. Installation selon la revendication 6 ou 7, **caractérisée** en ce que la soufflante (50) est suivie d'un répartiteur (54) auquel sont raccordées les conduites (34) apportant le flux d'air aux dispositifs de dosage (10A, 10B, 10C), le flux d'air dans ces conduites (34) pouvant de préférence être individuellement réglé au moyen de soupapes principalement disposées dans le répartiteur (54).

9. Installation selon l'une des revendications 6 à 8, **caractérisée** par un dispositif de commande qui, à l'aide de valeurs de consigne réglées concernant les proportions souhaitées de mélange et le débit souhaité de transport par unité de temps, et des valeurs réelles déterminées, entreprend une régulation correspondante sur la soufflante (50), le répartiteur (54), le dispositif de dosage (10) et/ou le dispositif de délivrance (70), le débit de matériau en vrac pour les différents dispositifs de dosage (10A, 10B, 10C) pouvant de préférence être modifié en faisant varier la quantité apportée d'air par unité de temps.
